(19) Europäisches Patentamt
European Patent Office
Office européen des brevets

(11) **EP 4 322 512 A1**

(12) **EUROPEAN PATENT APPLICATION**
published in accordance with Art. 153(4) EPC

(43) Date of publication:
**14.02.2024 Bulletin 2024/07**

(21) Application number: **21935930.4**

(22) Date of filing: **05.04.2021**

(51) International Patent Classification (IPC):
**H04M 11/00** (2006.01)   **H04W 56/00** (2009.01)

(52) Cooperative Patent Classification (CPC):
**H04M 11/00; H04W 56/00**

(86) International application number:
**PCT/JP2021/014517**

(87) International publication number:
**WO 2022/215122 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-ku**
**Tokyo 100-6150 (JP)**

(72) Inventors:
• **KUMAGAI, Shinya**
**Tokyo 100-6150 (JP)**

• **NAGATA, Satoshi**
**Tokyo 100-6150 (JP)**
• **LIU, Wenjia**
**Beijing 100190 (CN)**
• **WANG, Jing**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL AND BASE STATION**

(57) A terminal including: a control unit configured to calculate a timing adjustment value including a terminal-specific drift rate caused by a drift of a relay apparatus in a non-terrestrial network; and a transmission unit configured to transmit a signal at a timing based on the timing adjustment value.

FIG.3

EP 4 322 512 A1

**Description**

[FIELD OF THE INVENTION]

The present invention relates to a terminal and a base station in a wireless communication system.

[BACKGROUND ART]

In the 3GPP (3rd Generation Partnership Project), a wireless communication scheme called 5G or NR (New Radio) (hereinafter referred to as "NR") has been proposed in order to realize further increase in system capacity, further increase in data transmission rate, further reduction in delay in a wireless section, and the like. In 5G, various wireless technologies and network architectures have been studied in order to satisfy a requirement that a delay in a wireless section be equal to or less than 1ms while achieving a throughput equal to or greater than 10Gbps.
Further, in NR, similarly to LTE, in order to match reception timings of uplink signals from a plurality of terminals in a base station, TA (Timing Advance) control for adjusting signal transmission timings of terminals is performed (Non-Patent Documents 1 and 2).

[Prior Art Document]

[Non Patent Documents]

[Non-Patent Document 1] 3GPP TS 38.213 V16. 5.0 (2021-03)
[Non-Patent Document 2] 3GPP TS 38.211 V16. 5.0 (2021-03)

SUMMARY OF THE INVENTION

[Problems to be Solved by the Invention]

In 3GPP, NTN (Non-Terrestrial Networks) has been studied. The above-described TA control is also required in NTN.
However, in the related art, there is no proposal about a specific TA calculation method using a TA drift rate caused by a drift of a relay apparatus or a TA margin required according to an estimation error of TA. Therefore, in the related art, there is a problem that a timing adjustment value in the non-terrestrial system network cannot be appropriately calculated.
The present invention has been made in view of the above circumstances, and an object of the present invention is to provide a technique capable of appropriately calculating a timing adjustment value in a non-terrestrial network.

[Means for solving the problem]

According to the disclosed technique, there is provided a terminal including:

a control unit configured to calculate a timing adjustment value including a terminal-specific drift rate caused by a drift of a relay apparatus in a non-terrestrial network; and
a transmission unit configured to transmit a signal at a timing based on the timing adjustment value.

[Effects of the Invention]

According to the disclosed technique, there is provided a technique that makes it possible to appropriately calculate a timing adjustment value in a non-terrestrial network.

[BRIEF DESCRIPTION OF THE DRAWINGS]

[Fig. 1] FIG. 1 is a diagram showing a configuration example of a wireless communication system according to an embodiment of the present invention;

[Fig. 2] FIG. 2 is a diagram for explaining a TA drift rate;

[Fig. 3] FIG. 3 is a diagram for explaining Examples 1-1 and 1-2;

[Fig. 4] FIG. 4 is a diagram for explaining a TA margin;

[Fig. 5] FIG. 5 is a diagram for explaining Examples 2-1 and 2-2;

[Fig. 6] FIG. 6 is a diagram for explaining Example 3;

[Fig. 7] FIG. 7 is a diagram for explaining Example 4;

[Fig. 8] FIG. 8 is a diagram showing an example of a functional configuration of a base station 10 according to an embodiment of the present invention;

[Fig. 9] FIG. 9 is a diagram showing an example of a functional configuration of a terminal 20 according to an embodiment of the present invention;

[Fig. 10] FIG. 10 is a diagram illustrating an example of a hardware configuration of a base station 10 or a terminal 20 according to an embodiment of the present invention.

## DETAILED DESCRIPTION OF THE INVENTION

Hereinafter, embodiments of the present invention will be described with reference to the drawings. It should be noted that the embodiments described below are merely examples, and embodiments to which the present invention is applied are not limited to the following embodiments.

Although it is assumed that the wireless communication system according to the embodiment of the present invention is NR, the technique according to the present invention is applicable not only to NR but also to other systems. For example, the technology according to the present invention can be applied to systems compliant with 3G, 4G, and 6G standards.

(System Configuration Example)

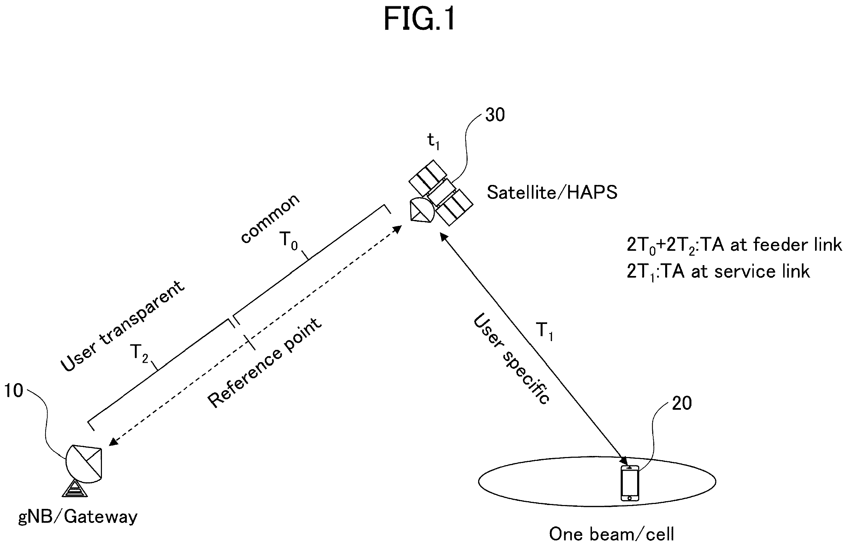

FIG. 1 shows a configuration example of a wireless communication system according to the present embodiment. The wireless communication system according to the present embodiment is an NTN (Non-Terrestrial Networks) system. Note that "NTN (non-terrestrial network)" in the present embodiment refers to all systems that perform communication between a terminal and a base station via a relay apparatus (e.g., satellites, airplanes, drones, etc.) in the air, and also includes HAPS (High-Altitude Platforms) and the like.

As shown in FIG. 1, the wireless communication system according to the present embodiment includes a terminal 20 on the ground, a satellite 30 (which may be HAPS unmanned aircraft or the like) in the sky, and a base station 10 on the ground. The base station 10 communicates with the satellite 30 via a gateway. The gateway and the base station may be collectively referred to as a "base station".

The signal transmitted from the base station 10 reaches the satellite 30, and is transmitted from the satellite 30 to the terminal 20. The signal transmitted from the terminal 20 reaches the satellite 30, and is transmitted from the satellite 30 to the base station 10. A link between the base station 10 and the satellite 30 is called a feeder link, and a link between the terminal 20 and the satellite 30 is called a service link. The base station 10 may be referred to as a gNB, and the terminal 20 may be referred to as a UE.

The base station 10 is a communication apparatus that provides one or more cells and performs wireless communication with the terminal 20 via the satellite 30. A physical resource of a radio signal is defined in a time domain and a frequency domain. The time domain may be defined by the number of OFDM symbols, and the frequency domain may be defined by the number of subcarriers or the number of resource blocks. A TTI (Transmission Time Interval) in the time domain may be a slot, or a TTI may be a subframe.

The base station 10 is capable of performing carrier aggregation in which a plurality of cells (a plurality of CCs (component carriers)) are aggregated to perform communication with the terminal 20. In carrier aggregation, one PCell (primary cell) and one or more SCells (secondary cells) are used.

The base station 10 transmits a synchronization signal, system information (such as an SIB), and the like to the terminal 20. The base station 10 transmits a control signal or data to the terminal 20 through downlink (DL), and receives a control signal or data from the terminal 20 through uplink (UL). Here, what is transmitted on a control channel such as the PUCCH or the PDCCH is referred to as a control signal, and what is transmitted on a shared channel such as the PUSCH or the PDSCH is referred to as data. However, such a way of naming is merely an example.

The terminal 20 is a communication apparatus including an antenna capable of communicating with the satellite 30 and having a function of performing wireless communication with the base station 10 via the satellite 30. The terminal 20 receives a control signal or data from the base station 10 and transmits a control signal or data to the base station 10 in UL to use various communication services provided by the wireless communication system.

The terminal 20 can also perform carrier aggregation in which communication with the base station 10 is performed by aggregating a plurality of cells (a plurality of CCs (component carriers)). In carrier aggregation, one PCell (primary cell) and one or more SCells (secondary cells) are used. Also, a PUCCH-SCell with PUCCH may be used.

Further, the terminal 20 has a GNSS positioning function, and can acquire its own position, a reference time, and the like by the GNSS positioning function.

(About TA)

Also in the NTN, timing advance (TA) control for adjusting transmission timings of terminals is performed in order to match reception timings of uplink signals from a plurality of terminals in the base station 10.

In the TA control, for example, as described in 4.3.1 of Non-Patent Document 1, the terminal 20 transmits an uplink frame i corresponding to a downlink frame i before the start timing of the downlink frame i by $T_{TA}$. In the present embodiment, $T_{TA}$ may be referred to as "TA". TA may also be referred to as a timing adjustment value. That is, the terminal 20 performs signal transmission at a timing based on reception timing of a signal and the timing adjustment value.

In the NTN according to the present embodiment, TA (Full TA) is as follows.

```
Full TA = TA on feeder link + TA on service link
```

TA on the feeder link is a round trip delay (RTD) on the feeder link and is 2 ($T_0 + T_2$).

As shown in FIG. 1, $T_2$ is a value that is transparent to a UE and is compensated by the network. To simplify gNB implementation, $T_2$ may be a constant. $T_0$ is a value common to all the UEs, and is a value that can be broadcast to terminals 20 by a SIB, for example. Note that the reference point (RP) may be in the service link, in which case the $T_0$ is a negative value.

TA on the service link is a round trip delay (RTD) on the service link and is $2T_1$. $T_1$ is a UE-specific value and varies according to the location of the UE. The terminal 20 can calculate $T_1$ from, for example, its own position information measured by its own GNSS position measuring function and orbit information data (ephemeris) of the satellite 30 notified from the network.

The terminal 20 can calculate its own TA from the UE-specific TA ($2T_1$) estimated (calculated) by the terminal 20 itself and the common TA ($2T_0$) by, for example, the following equation.

```
TA = (N_TA + N_TA, offset [+ X]) x T_c [+ X]
```

Here, $N_{TA}$ is a value derived from the UE-specific TA estimated by the UE itself. X is a value derived from at least the common timing offset value (if broadcast from the network). Note that either of the two Xs is deleted. For example, a value defined in Non-Patent Document 1 can be used as $N_{TA, offset}$. The common timing offset value is, for example, a value based on $T_0$.

In addition, the terminal 20 may calculate its own TA using the following equation.

```
TA = (N_TA + N_TA, UE-specific + N_TA, common + N_TA, offset) × T_c
```

In the above equation, $N_{TA}$ and $N_{TA, offset}$ can be those defined in the specification of Rel-16 such as Non-Patent Document 1. $N_{TA, UE-specific}$ is a TA estimated by the UE itself, and $N_{TA, common}$ is a common TA, including any timing offset required in the network.

However, in the above-described TA calculation method, it is not clear how the terminal 20 calculates TA in consideration of a TA drift rate generated according to movement of the satellite 30. In addition, it is not clear how the terminal 20 calculates the TA in consideration of a TA margin for compensating for a TA estimation error.

Hereinafter, Examples 1 to 4 will be described as proposals for the above problem. The Example 1 relates to the TA drift rate. The Example 2 relates to the TA margin. The Example 3 is an ecample of UE capability definition and reporting. The Example 4 is an example of indication from a network (base station). Any two or more or all of Examples 1 to 4 can be implemented in any combination.

(Example 1)

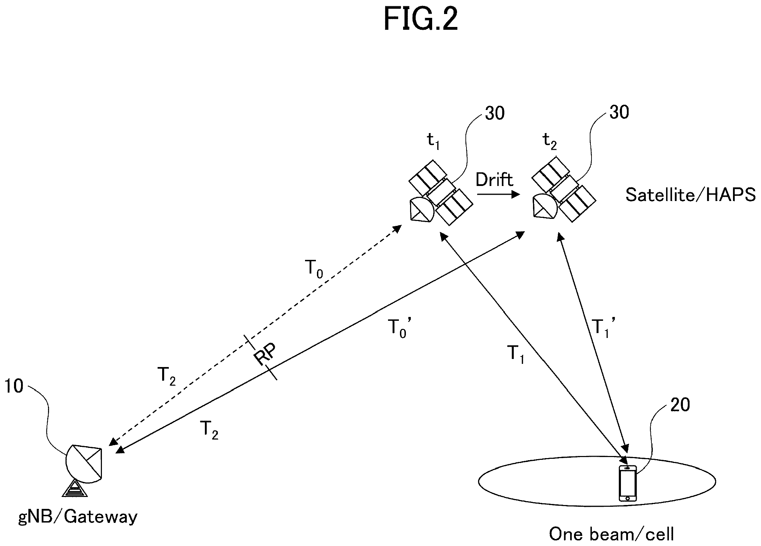

As shown in FIG. 2, movement (drift) of the satellite 30 causes a change in TA. This change is called TA drift rate. The TA drift rate includes a common TA drift rate that is common to UEs and a UE-specific TA drift rate that is UE-specific. As shown in FIG. 2, when $T_0$ and $T_1$ at time $t_1$ become $T_0'$ and $T_1'$ at time $t_2$, the common TA drift rate and the UE-specific TA drift rate are as follows.

$$\text{Common TA drift rate} = (T_0' - T_0) / (t_2 - t_1)$$

$$\text{UE-specific TA drift rate} = (T_1' - T_1) / (t_2 - t_1)$$

Hereinafter, Examples 1-1 to 1-4 will be described as examples of a method of calculating TA in consideration of the TA drift rate. The Example 1 is applicable to a case where the terminal 20 is in either the RRC idle / Inactive mode or RRC_connected mode. The Examples 2-4 are also applicable regardless of whether the terminal 20 is in the RRC_idle / Inactive mode or RRC_connected mode.

<Example 1-1>

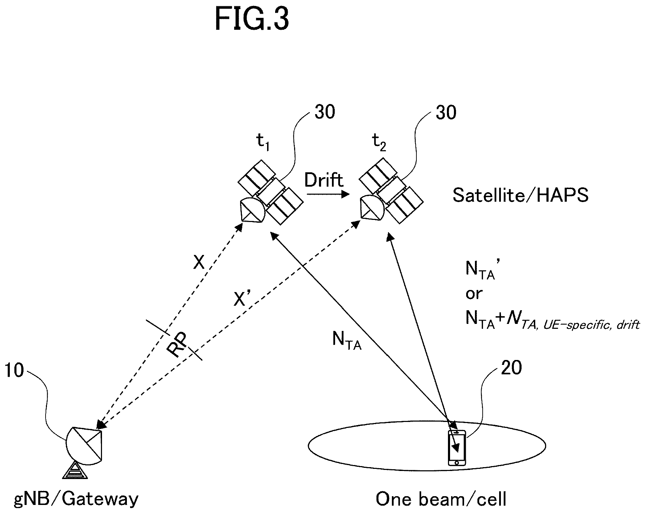

FIG. 3 shows Example 1-1 (and Example 1-2). In Example 1-1, based on the above-described "TA = $(N_{TA}$ + $N_{TA, offset}$ [+ X]) $\times T_c$ [+ X]", the terminal 20 calculates TA by inputting the UE-specific TA drift rate ($N_{TA, UE\text{-}specific, drift}$) as a value separated as described below.

$$TA = (N_{TA} + N_{TA, UE\text{-}specific, drift} + N_{TA, offset} [+ X]) \times T_c [+ X]$$

As mentioned above and as shown in FIG. 3, $N_{TA}$ is a UE-specific TA. $N_{TA, UE\text{-}specific, drift}$ is derived from the UE-specific timing drift rate caused by the drift of the satellite 30. Depending on its capability, the terminal 20 estimates (calculates) $N_{TA, UE\text{-}specific, drift}$ by itself or receives $N_{TA, UE\text{-}specific, drift}$ from the network (for example, the base station 10) and uses $N_{TA, UE\text{-}specific, drift}$ for TA calculation.

Also, one or more levels may be defined for the UE-specific TA drift rate calculation capability of the terminal 20. For example, according to UE-specific TA drift rate calculation accuracy, three levels of terminal capabilities may be defined as high accuracy, medium accuracy, and low accuracy. The common TA (X) may be derived from a common timing offset value broadcast from the network. At this time, a common timing offset value common to the UE-specific TA drift rate calculation capabilities having one or more levels described above may be notified, or a different common timing offset value may be notified for each level. The terminal 20 may derive the common TA (X) based on its own UE-specific TA drift rate calculation capability (level) and the notified common timing offset value.

<Example 1-2>

Also in the Example 1-2, based on the above-described "TA = $(N_{TA} + N_{TA, offset}$ [+ X]) $\times T_c$ [+ X]", the terminal 20 calculates the TA by the following equation by including the UE-specific TA drift rate in the UE-specific TA ($N_{TA}$). In FIG. 3, the UE-specific TA not including the UE-specific TA drift rate is denoted by $N_{TA}'$.

$$TA = (N_{TA} + N_{TA, offset} [+ X]) \times T_c [+ X]$$

$N_{TA}$ is a value derived from the UE-specific TA taking into account the UE-specific TA drift rate. For example, if a UE-specific TA not including the UE-specific TA drift rate is $N_{TA}'$, then $N_{TA} = N_{TA}' + N_{TA, UE\text{-}specific, drift}$.

Depending on its capability, the terminal 20 estimates $N_{TA}$ by itself or receives $N_{TA}$ from the network (for example, the base station 10) and uses it for TA calculation.

In addition, one or more levels may be defined for the UE-specific TA drift rate calculation capability of the terminal 20. For example, according to UE-specific TA drift rate calculation accuracy, three levels of terminal capabilities may be defined as high accuracy, medium accuracy, and low accuracy. The common TA (X) may be derived from a common timing offset value broadcast from the network. At this time, a common timing offset value common to the UE-specific TA drift rate calculation capabilities having one or more levels described above may be notified, or a different common timing offset value may be notified for each level. The terminal 20 may derive the common TA (X) based on its own UE-specific TA drift rate calculation capability (level) and the notified common timing offset value.

<Example 1-3>

Also in the Example 1-3, "TA = $(N_{TA} + N_{TA, offset}$ [+ X]) $\times T_c$ [+ X]" described above is used as a base.

In the Example 1-3, the terminal 20 calculates TA by the following equation using a new value ($N_{TA, drift}$) of a TA drift rate including both the common TA drift rate and the UE-specific TA drift rate.

$$TA = (N_{TA} + N_{TA, drift} + N_{TA, offset} [+ X]) \times T_c [+ X]$$

$N_{TA, drift}$ is a value derived from the common TA drift rate and the UE-specific TA drift rate, resulting from the drift of the satellite 30. Note that $N_{TA, drift}$ may be a value derived from either the common TA drift rate or the UE-specific TA drift rate.

The terminal 20 receives $N_{TA, drift}$ from the network (for example, the base station 10) and uses it for TA calculation. When the terminal 20 has a capability of estimating $N_{TA, drift}$, $N_{TA, drift}$ may be estimated by the terminal 20 itself.

<Example 1-4>

The Example 1-4 is also based on the above-described "TA = $(N_{TA} + N_{TA, offset} [+ X]) \times T_c [+ X]$".

In the Example 1-4, by using a common TA ($X_d$) including a value of the UE-specific TA drift rate, the terminal 20 calculates TA according to the following equation.

$$TA = (N_{TA} + N_{TA, offset} [+ X_d]) \times T_c [+ X_d]$$

$X_d$ is a value derived from at least the common timing offset value (if broadcast from the network) taking into account the UE-specific TA drift rate.

For example, if a common TA not including the UE-specific TA drift rate is X', then $X_d = X' + N_{TA, UE-specific, drift}$.

The terminal 20 receives $X_d$ from the network (for example, the base station 10) and uses it for TA calculation. When the terminal 20 has a capability of estimating $X_d$, $X_d$ may be estimated by the terminal 20 itself.

<Other example in Example 1>

Although the calculation method based on "TA = $(N_{TA} + N_{TA, offset} [+ X]) \times T_c [+ X]$" has been described above as an example, the techniques described in Examples 1-1 to 1-4 can be similarly applied to a case where "TA = $(N_{TA} + N_{TA, UE-specific} + N_{TA, offset} + N_{TA, common}) \times T_c$" is used as a base. Specifically, TA can be calculated by the following equation.

Example 1-1:

$$TA = (N_{TA} + N_{TA, UE-specific} + N_{TA, UE-specific, drift} + N_{TA, offset} + N_{TA, common}) \times T_c$$

$N_{TA, UE-specific, drift}$ is derived from the UE-specific TA drift rate caused by a drift of the satellite 30.

Example 1-2:

$$TA = (N_{TA} + N_{TA, UE-specific} + N_{TA, offset} + N_{TA, common}) \times Tc$$

$N_{TA, UE-specific}$ is a value taking into account the UE-specific TA drift rate.

Example 1-3:

$$TA = (N_{TA} + N_{TA, \text{ UE-specific}} + N_{TA, \text{ drift}} + N_{TA, \text{ offset}} + N_{TA, \text{ common}}) \times T_c$$

$N_{TA, \text{ drift}}$ is a value derived from the common TA drift rate and the UE-specific TA drift rate resulting from a drift of the satellite 30. Note that $N_{TA, \text{ drift}}$ may be a value derived from either the common TA drift rate or the UE-specific TA drift rate.

Example 1-4:

$$TA = (N_{TA} + N_{TA, \text{ UE-specific}} + N_{TA, \text{ offset}} + N_{TA, \text{ common}}) \times T_c$$

$N_{TA, \text{ common}}$ is a value that takes into account the UE-specific TA drift rate.

<Effects of Example 1>

According to the Example 1, the terminal 20 can calculate TA in consideration of the UE-specific TA drift rate.

(Example 2)

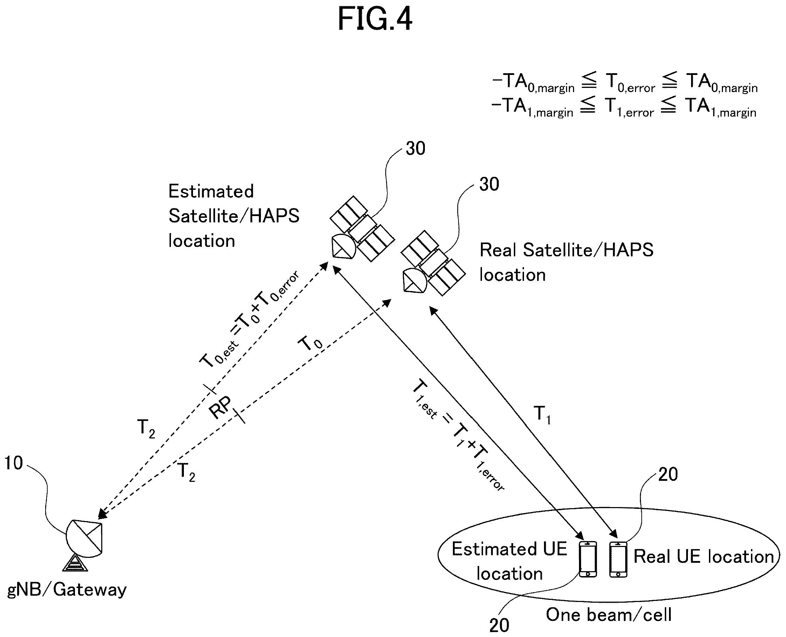

Next, Example 2 will be described. The Example 2 relates to a TA margin given to the TA in order to compensate for a TA estimation error. First, the TA margin will be described with reference to FIG. 4.

The estimation error of the TA results from inaccurate estimation of the position of the terminal 20 / satellite 30 (accuracy of position estimation is related to GNSS positioning capability, etc.), inaccurate ephemeris of the satellite 30, etc. As shown in FIG. 4, assuming that an error related to $T_0$ is $T_{0, \text{ error}}$, the estimated value of $T_0$ can be expressed as $T_{0, \text{ est}} = T_0 + T_{0, \text{ error}}$. Similarly, if the error related to $T_1$ is $T_{1, \text{ error}}$, the estimate of $T_1$ can be expressed as $T_{1, \text{ est}} = T_0 + T_{1, \text{ error}}$. The common TA margin and the UE-specific TA margin are as follows.

The common TA margin is a margin related to a TA in the feeder link. The common TA margin may be estimated by the base station 10 based on the estimation accuracy of the position of the satellite 30, for example, or may be a value determined in advance by a specification or the like. When the common TA margin is denoted as $TA_{0, \text{ margin}}$, $TA_{0, \text{ margin}}$ represents the maximum estimation error in the common TA. As shown in FIG. 4, $-TA_{0, \text{ margin}} \leqq T_{0, \text{ error}} \leqq TA_{0, \text{ margin}}$. That is, $T_{0, \text{ error}}$ is in the range $[- TA_{0, \text{ margin}}, TA_{0, \text{ margin}}]$.

The UE-specific TA margin is a margin related to TA in the service link estimated by the terminal 20 based on the positions of the terminal 20 and the satellite 30. The UE-specific TA margin may be estimated by the terminal 20 based on, for example, the estimation accuracy of the position of the satellite 30 and the estimation accuracy of the position of the terminal 20, or may be a value determined in advance by a specification or the like. When the UE-specific TA margin is denoted as $TA_{1, \text{ margin}}$, $TA_{1, \text{ margin}}$ represents the maximum estimation error in the UE-specific TA. As shown in FIG. 4, $-TA_{1, \text{ margin}} \leqq T_{1, \text{ error}} \leqq TA_{1, \text{ margin}}$. That is, $T_{1, \text{ error}}$ is in the range $[- TA_{1, \text{ margin}}, TA_{1, \text{ margin}}]$.

As described above, $TA_{1, \text{ margin}}$ and $TA_{0, \text{ margin}}$ can be defined, but how to calculate TA in consideration of $TA_{1, \text{ margin}}$ and the like has not been proposed in the related art. Therefore, Examples 2-1 to 2-4 will be described below as a method of calculating TA in consideration of the TA margin.

<Example 2-1>

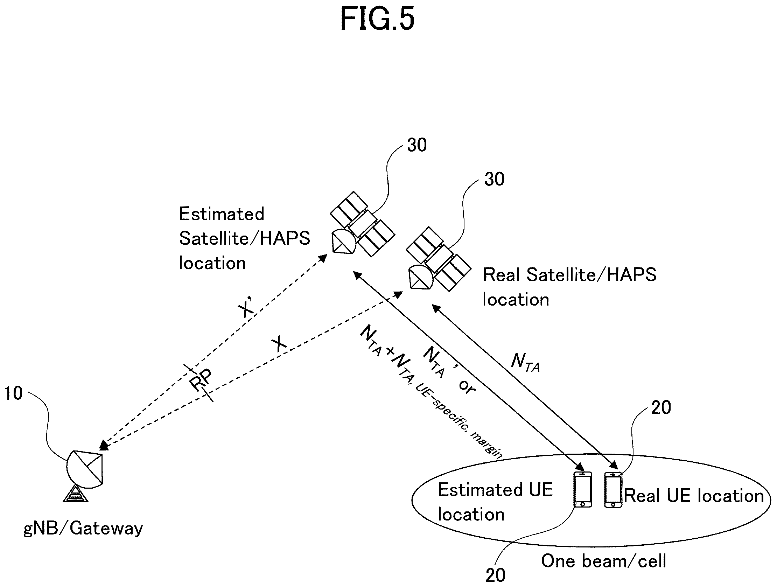

FIG. 5 shows Example 2-1 (and Example 2-2). In the Example 2-1, based on the above-described "TA = $(N_{TA} + N_{TA, \text{ offset}} [+ X]) \times T_c [+ X]$", the terminal 20 calculates TA by inputting the UE-specific TA margin ($N_{TA, \text{ UE-specific, margin}}$) as a value separated as described below.

$$TA = (N_{TA} - N_{TA, \text{ UE-specific, margin}} + N_{TA, \text{ offset}} [+ X]) \times T_c [+ X]$$

$N_{TA, \text{ UE-specific, margin}}$ is a margin with respect to the maximum estimation error of the UE-specific TA and is a value related to the accuracy (GNSS positioning capability) of position estimation of the terminal 20 and the satellite 30.

The terminal 20 estimates (calculates) $N_{TA, \text{ UE-specific, margin}}$ by itself or receives $N_{TA, \text{ UE-specific, margin}}$ from the network (for example, the base station 10) and uses $N_{TA, \text{UE-specific, margin}}$ for TA calculation.

Also, one or more levels may be defined for the UE-specific TA margin calculation capability of the terminal 20. For example, three levels of terminal capabilities of high accuracy, medium accuracy, and low accuracy may be defined according to the UE-specific TA margin calculation accuracy. The common TA (X) may be derived from a common timing offset value broadcast from the network. At this time, a common timing offset value common to the UE-specific TA margin calculation capabilities having one or more levels described above may be notified, or a different common timing offset value may be notified for each level. The terminal 20 may derive the common TA (X) based on its own UE-specific TA margin calculation capability (level) and the notified common timing offset value.

<Example 2-2>

In the Example 2-2, based on the above-described "TA = $(N_{TA} + N_{TA, \text{offset}} [+ X]) \times T_c [+ X]$", the terminal 20 calculates TA by the following equation by including the UE-specific TA margin in the UE-specific TA ($N_{TA}$). In FIG. 5, the UE-specific TA not including the UE-specific TA margin is denoted as $N_{TA}'$.

$$TA = (N_{TA} + N_{TA, \text{offset}} [+ X]) \times T_c [+ X]$$

$N_{TA}$ is a value derived from the UE-specific TA in consideration of the UE-specific TA margin. For example, if the UE-specific TA not including the UE-specific TA margin is $N_{TA}'$, then $N_{TA} = N_{TA}' - N_{TA, \text{UE-specific, margin}}$.

Depending on its capability, the terminal 20 estimates $N_{TA}$ by itself or receives $N_{TA}$ from the network (for example, the base station 10) and uses it for TA calculation.

Also, one or more levels may be defined for the UE-specific TA margin calculation capability of the terminal 20. For example, three levels of terminal capabilities of high accuracy, medium accuracy, and low accuracy may be defined according to the UE-specific TA margin calculation accuracy. The common TA (X) may be derived from a common timing offset value broadcast from the network. At this time, a common timing offset value common to the UE-specific TA margin calculation capabilities having one or more levels described above may be notified, or a different common timing offset value may be notified for each level. The terminal 20 may derive the common TA (X) based on its own UE-specific TA margin calculation capability (level) and the notified common timing offset value.

<Example 2-3>

The Example 2-3 is also based on the above-described "TA = $(N_{TA} + N_{TA, \text{offset}} [+ X]) \times T_c [+ X]$".

In the Example 2-3, the terminal 20 calculates TA by the following equation using a new value ($N_{TA, \text{margin}}$) of a TA margin including both the common TA margin and the UE-specific TA margin.

$$TA = (N_{TA} - N_{TA, \text{margin}} + N_{TA, \text{offset}} [+ X]) \times T_c [+ X]$$

$N_{TA, \text{margin}}$ is a margin for the maximum estimation error in the common TA and the maximum estimation error in the UE-specific TA. However, $N_{TA, \text{margin}}$ may be a margin for either the maximum estimation error in the common TA or the maximum estimation error in the UE-specific TA. These errors are related to accuracy of terminal position estimation, accuracy of satellite position estimation, GNSS positioning capability of the terminal, GPS positioning capability of the satellite, etc.

The terminal 20 receives $N_{TA, \text{margin}}$ from the network (for example, the base station 10) and uses it for TA calculation. When the terminal 20 has a capability of estimating $N_{TA, \text{margin}}$, $N_{TA, \text{margin}}$ may be estimated by the terminal 20 itself.

<Example 2-4>

The Example 2-4 is also based on the above-described

$$"TA = (N_{TA} + N_{TA, \text{offset}} [+ X]) \times T_c [+ X]".$$

In the Example 2-4, by using the common TA ($X_m$) including the value of the UE-specific TA margin, the terminal 20 calculates TA by the following equation.

$$TA = (N_{TA} + N_{TA,\ offset}\ [+\ Xm])\ \times\ T_c\ [+\ Xm]$$

$X_m$ is a value derived from at least the common timing offset value (if broadcast from the network) taking into account the UE-specific TA margin.

For example, if a common TA not including the UE-specific TA margin is X', then $X_m = X' - N_{TA,\ UE\text{-}specific,\ margin}$.

The terminal 20 receives $X_m$ from the network (for example, the base station 10) and uses it for TA calculation. Note that when the terminal 20 has a capability of estimating $X_m$, $X_m$ may be estimated by the terminal 20 itself.

<Other examples in Example 2>

Although the calculation method based on "TA = $(N_{TA} + N_{TA,\ offset}\ [+\ X]) \times T_c\ [+\ X]$" has been described above as an example, the technique described in the Examples 2-1 to 2-4 can be similarly applied to a case where "TA = $(N_{TA} + N_{TA,\ UE\text{-}specific} + N_{TA,\ offset} + N_{TA,\ common}) \times T_c$" is used as a base. Specifically, TA can be calculated by the following equation.

Example 2-1:

$$TA = (N_{TA} + N_{TA,\ UE\text{-}specific} - N_{TA,\ UE\text{-}specific,\ margin} + N_{TA,\ offset} + N_{TA,\ common})\ \times\ T_c$$

$N_{TA,\ UE\text{-}specific,\ margin}$ is a UE-specific TA margin.

Example 2-2:

$$TA = (N_{TA} + N_{TA,\ UE\text{-}specific} + N_{TA,\ offset} + N_{TA,\ common})\ \times\ T_c$$

$N_{TA,\ UE\text{-}specific}$ is a value to which a UE-specific TA margin is added.

Example 2-3:

$$TA = (N_{TA} + N_{TA,\ UE\text{-}specific} + N_{TA,\ margin} + N_{TA,\ offset\ +\ NTA,\ common})\ \times\ T_c$$

$N_{TA,\ margin}$ includes a common TA margin and a UE-specific TA margin (alternatively, the common TA margin or the UE-specific TA margin).

Example 2-4:

$$TA = (N_{TA} + N_{TA,\ UE\text{-}specific} + N_{TA,\ offset} + N_{TA,\ common})\ \times\ T_c$$

$N_{TA,\ common}$ is a value that takes into account the UE-specific TA margin.

<Effects of Example 2>

According to the Example 2, the terminal 20 can calculate TA in consideration of the UE-specific TA margin.

(Example 3)

Next, Example 3 will be described. In the above-described Examples 1-1 and 1-2, for example, the terminal 20 estimates (calculates) the UE-specific TA drift rate. In the Examples 2-1 and 2-2, for example, the terminal 20 estimates the UE-specific TA margin. However, the accuracy of the estimation of the UE-specific TA drift rate and the accuracy of the estimation of the UE-specific TA margin depend on capability of the terminal 20. For example, there may be a case where the terminal 20 does not have a capability (UE capability) of estimating the UE-specific TA drift rate or the UE-specific TA margin.
Therefore, in Example 3, the UE capability will be described. Examples 3-1 to 3-3 will be described below.

<Example 3-1>

A UE capability for calculation and pre-compensation of a UE-specific TA drift rate is defined such that the UE capability indicates whether the UE-specific TA drift rate is pre-compensated.

<Example 3-2>

A UE capability for calculation and pre-compensation of a UE-specific TA margin is defined, and the UE capability indicates whether the UE-specific TA margin is pre-compensated.

<Example 3-3>

The terminal 20 reports a UE capability related to a UE-specific TA drift rate or a UE-specific TA margin to the base station 10. The terminal 20 may report a UE capability related to the UE-specific TA drift rate and the UE-specific TA margin to the base station 10. Hereinafter, "UE-specific TA drift rate or UE-specific TA margin, or, UE-specific TA drift rate and UE-specific TA margin" is referred to as "UE-specific TA drift rate / UE-specific TA margin".

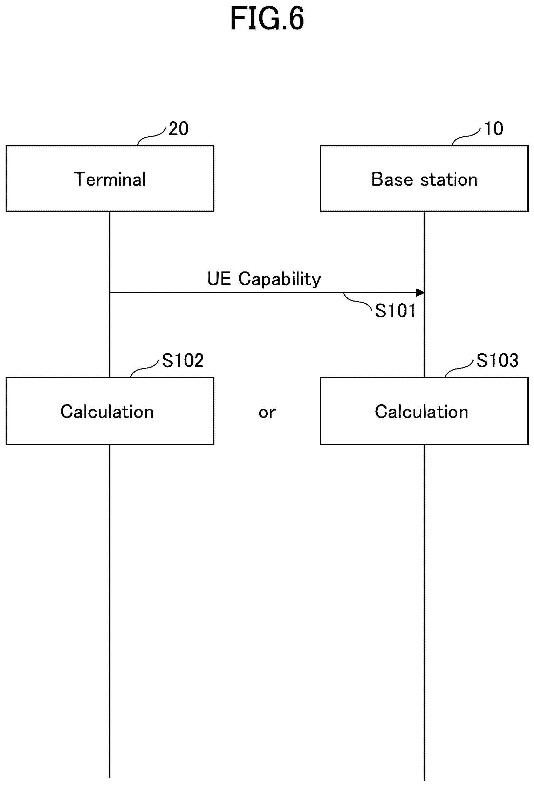

FIG. 6 shows a sequence example of the Example 3-3. In S101, the terminal 20 reports UE capability indicating capability of calculation (estimation) of the UE-specific TA drift rate / UE-specific TA margin to the base stations 10.
For example, when the UE capability indicates that the terminal 20 has a calculation capability of the UE-specific TA drift rate / UE-specific TA margin, the terminal 20 calculates the UE-specific TA drift rate / UE-specific TA margin by itself in S102, and calculates TA by the method described in the Examples 1-1, 1-2, 2-1, or 2-2.
On the other hand, for example, when the UE capability indicates that the terminal 20 does not have calculation capability of the UE-specific TA drift rate / the UE-specific TA margin, in S103, the base station 10 calculates (estimates) the UE-specific TA drift rate / the UE-specific TA margin in the terminal 20 by using the position information and the like of the terminals 20. Thereafter, for example, the base station 10 notifies the terminal 20 of the calculated UE-specific TA drift rate / UE-specific TA margin, and the terminal 20 calculates TA by the method described in the Examples 1-1, 1-2, 2-1, or 2-2 using the value notified from the base station 10.
Also, instead of defining individual UE capability for each element of TA calculation (that is, the UE-specific TA drift rate and the UE-specific TA margin) as in the Example 3-1 and the Example 3-2, UE capability indicating calculation capability of the entire UE-specific TA may be defined. At this time, one or more levels may be defined for the calculation capability of the entire UE-specific TA. For example, three levels of terminal capabilities of high accuracy, medium accuracy, and low accuracy may be defined according to the calculation accuracy of the entire UE-specific TA. In S101, the terminal 20 reports a UE capability indicating a capability of calculating (estimating) the entire UE-specific TA to the base station 10. Based on the reported UE capability, the base station 10 may notify a common TA value that is common to the calculation capability of the entire UE-specific TA having the one or more levels described above, or may notify a different common TA value for each level. The terminal 20 may derive the Full TA based on the calculation capability (level) of the entire UE-specific TA of the terminal 20 and the notified common TA value.

<Effects of Example 3>

According to the Example 3, the base station 10 can grasp estimation capability of the UE-specific TA drift rate / UE-specific TA margin in the terminal 20.

(Example 4)

Next, Example 4 will be described. In Example 1-3 and Example 1-4 described above, for example, the network (that is, the base station 10) estimates (calculates) the UE-specific TA drift rate and notifies the terminal 20 of the estimation result. In Example 2-4 and Example 2-4, for example, the base station 10 estimates the UE-specific TA margin and notifies the terminal 20 of the estimation result.

More specifically, when the UE-specific TA drift rate is considered together with the common TA drift rate as in the Example 1-3 and the Example 1-4, information including the common TA drift rate and the UE-specific TA drift rate is notified from the base station 10 to the terminal 20. In addition, as in the Example 2-3 and the Example 2-4, when the UE-specific TA margin is considered together with the common TA margin, information including the common TA margin and the UE-specific TA margin is notified from the base station 10 to the terminal 20.

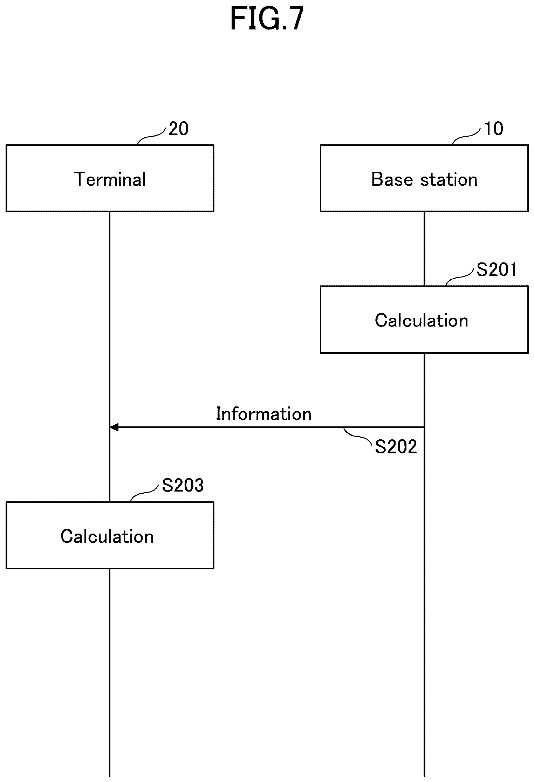

FIG. 7 illustrates a sequence example according to the Example 4. In S201, the base station 10 calculates information to be notified to the terminal 20, and notifies the terminal 20 of the information in S202. The terminal 20 calculates TA using the information in S203. The following Examples 4-1 and 4-2 will be described as a notification method using a specific example of information to be notified to the terminal 20.

<Example 4-1>

In the Example 4-1, the base station 20 notifies (broadcasts) the terminal 10 of a TA drift rate including the UE-specific TA drift rate using a SIB. Note that notification using the SIB is an example, and notification may be performed using a MAC CE, a DCI, or the like.

<Example 4-2>

In the Example 4-2, the base station 20 notifies (broadcasts) the terminal 10 of a TA margin including the UE-specific TA margin using a SIB. The notification using the SIB is an example, and the notification may be performed using a MAC CE, a DCI, or the like.

In consideration of the fact that the UE-specific TA margin is related to UE capability (estimation accuracy, performance of the GNSS positioning function, and the like), the following operation of option 1 or option 2 may be performed.

Option 1 : The base station 10 transmits (broadcasts) a plurality of TA margins to the terminal 20 using, for example, a SIB. Each terminal 20 that has received the plurality of TA margins selects which TA margin to use according to its own capability. As an example, a TA margin (maximum estimation error) selected by a terminal 20 capable of accurately estimating the UE-specific TA is smaller than a TA margin selected by a terminal 20 not capable of accurately estimating the UE-specific TA.

Option 2 : The base station 10 notifies the TA margin for each group of terminals. The terminals 20 belonging to the same group are notified of the same TA margin. As an example, the TA margin (maximum estimation error) for transmission to a group of terminals 20 capable of accurately estimating the UE-specific TA is smaller than the TA margin for transmission to a group of terminals 20 not capable of accurately estimating the UE-specific TA.

Options 1 and 2 described above may be applied to a TA drift rate. That is, it is as follows.

Option 1 : The base station 10 transmits (broadcasts) a plurality of TA drift rates to the terminal 20 using, for example, a SIB. Each terminal 20 that has received the plurality of TA drift rates selects which TA drift rate to use in accordance with its own position or the like.

Option 2 : The base station 10 notifies a TA drift rate for each group of terminals. Terminals 20 belonging to the same group are notified of the same TA drift rate. For example, a plurality of terminals located close to each other are grouped into the same group. Each terminal 20 calculates TA using the received TA drift rate.

<Other examples of Example 4>

The base station 10 may notify the terminal 20 whether or not the UE-specific TA drift rate / UE-specific TA margin is included in common information for TA calculation transmitted (broadcast) by the network (base station 10).

If the terminal 20 is notified by the base station 10 that the UE-specific TA drift rate / UE-specific TA margin is included in the common information, the terminal 20 can calculate TA using the common information.

If the terminal 20 is not notified from the base station 10 that the UE-specific TA drift rate / UE-specific TA margin is included in the common information, the terminal 20 can determine whether to estimate the UE-specific TA drift rate / UE-specific TA margin according to the capability described in the Example 3. If the terminal 20 can estimate the UE-specific TA drift rate / UE-specific TA margin, TA may be calculated by the method described in the Examples 1-1, 1-2, 2-1, or 2-2, for example.

<Effects of Example 4>

According to the Example 4, the base station 10 can notify the terminal 20 of information including the UE-specific TA drift rate / UE-specific TA margin.

(Apparatus Configuration)

Next, functional configuration examples of the base station 10 and the terminal 20 that execute the processes and operations described above will be described.

<Base Station 10>

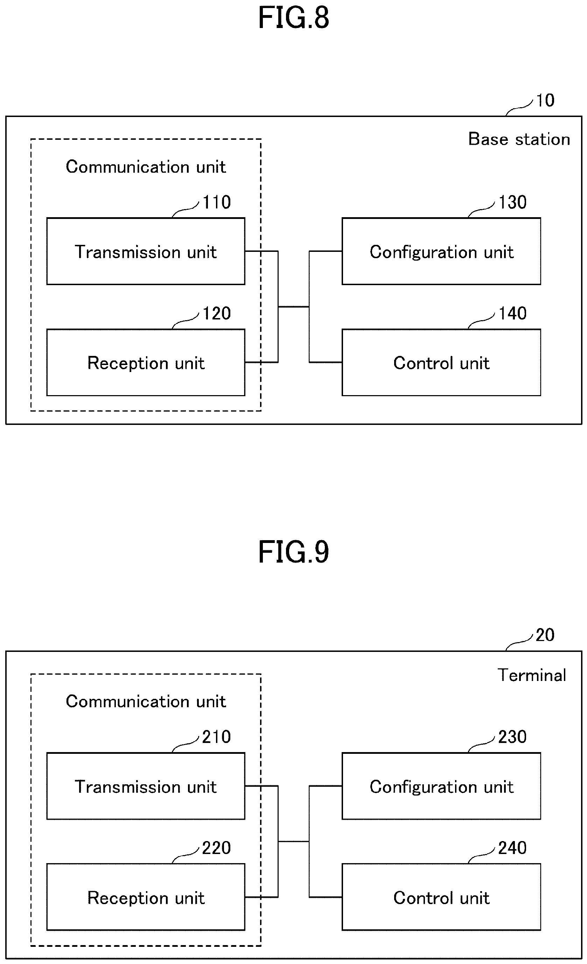

FIG. 8 is a diagram illustrating an example of a functional configuration of the base station 10. As illustrated in FIG. 8, the base station 10 includes a transmission unit 110, a reception unit 120, a configuration unit 130, and a control unit 140. The functional configuration shown in FIG. 8 is merely an example. As long as the operation according to the embodiment of the present invention can be executed, the function division and the name of the function unit may be any. The transmission unit 110 and the reception unit 120 may be collectively referred to as a communication unit.
The transmission unit 110 includes a function of generating a signal to be transmitted to the terminal 20 side (the satellite 30 side) and wirelessly transmitting the signal. The reception unit 120 includes a function of receiving various signals transmitted from the terminal 20 and acquiring, for example, information of a higher layer from the received signal. In addition, the transmission unit 110 has a function of transmitting NR-PSS, NR-SSS, NR-PBCH, DL / UL control signal, DCI by PDCCH, data by PDSCH, and the like to the terminal 20.
The configuration unit 130 stores configuration information set in advance and various kinds of configuration information to be transmitted to the terminal 20 in a storage device included in the configuration unit 130, and reads the configuration information from the storage device as necessary.
The control unit 140 performs scheduling of DL reception or UL transmission of the terminal 20 via the transmission unit 110. A functional unit related to signal transmission in the control unit 140 may be included in the transmission unit 110, and a functional unit related to signal reception in the control unit 140 may be included in the reception unit 120. Further, the transmission unit 110 may be referred to as a transmitter, and the reception unit 120 may be referred to as a receiver.

<Terminal 20>

FIG. 9 is a diagram illustrating an example of a functional configuration of the terminal 20. As illustrated in FIG. 9, the terminal 20 includes a transmission unit 210, a reception unit 220, a configuration unit 230, and a control unit 240. The functional configuration shown in FIG. 9 is merely an example. As long as the operation according to the embodiment of the present invention can be executed, the function division and the name of the function unit may be any. The transmission unit 210 and the reception unit 220 may be collectively referred to as a communication unit.
The transmission unit 210 generates a transmission signal from the transmission data and wirelessly transmits the transmission signal. The reception unit 220 wirelessly receives various signals and acquires a signal of a higher layer from the received signal of the physical layer. In addition, the reception unit 220 has a function of receiving NR-PSS, NR-SSS, NR-PBCH, DL / UL / SL control signal, DCI by PDCCH, data by PDSCH, and the like transmitted from the base station 10.
The configuration unit 230 stores various types of configuration information received from the base station 10 or another terminal by the reception unit 220 in a storage device included in the configuration unit 230, and reads out the configuration information from the storage device as necessary. The configuration unit 230 also stores configuration information that is configured in advance. The control unit 240 controls the terminal 20.
The terminal and the base station according to the present embodiment may be configured as a terminal and a base station described in the following items.

(Item 1)

A terminal including:

a control unit configured to calculate a timing adjustment value including a terminal-specific drift rate caused by a drift of a relay apparatus in a non-terrestrial network; and
a transmission unit configured to transmit a signal at a timing based on the timing adjustment value.

(Item 2)

The terminal as described in item 1,
wherein the control unit is configured to calculate the timing adjustment value using a value including the terminal-specific drift rate and a common drift rate.

(Item 3)

A terminal including:

a control unit configured to calculate a timing adjustment value including a terminal-specific margin in a service link of a non-terrestrial network; and
a transmission unit configured to transmit a signal at a timing based on the timing adjustment value.

(Item 4)

The terminal as described in item 3,
wherein the control unit is configured to calculate the timing adjustment value using a value including the terminal-specific margin and a common margin.

(Item 5)

A base station including:

a transmission unit configured to transmit a value including a terminal-specific drift rate caused by a drift of a relay apparatus in a non-terrestrial network, and including a common drift rate; and
a reception unit configured to receive a signal transmitted from a terminal at a timing based on a timing adjustment value calculated using the value.

(Item 6)

A base station including:

a transmission unit configured to transmit a value including a terminal-specific margin in a service link of a non-terrestrial network, and including a common margin; and
a reception unit configured to receive a signal transmitted from a terminal at a timing based on a timing adjustment value calculated using the value.

According to any of the above-described configurations, there is provided a technique capable of appropriately calculating a timing adjustment value in a non-terrestrial network. According to the item 2, since a value including the terminal-specific drift rate and the common drift rate can be used, calculation can be simplified. According to the item 4, since a value including a terminal-specific margin and a common margin can be used, calculation can be simplified.

(Hardware configuration)

The block diagrams (Fig. 6 and Fig. 7) used in the description of the embodiment described above illustrate the block of functional unit. Such function blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.
The function includes determining, determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions transmission is referred to as the transmitting unit or the transmitter. As described above, the attainment method thereof is not particularly limited.

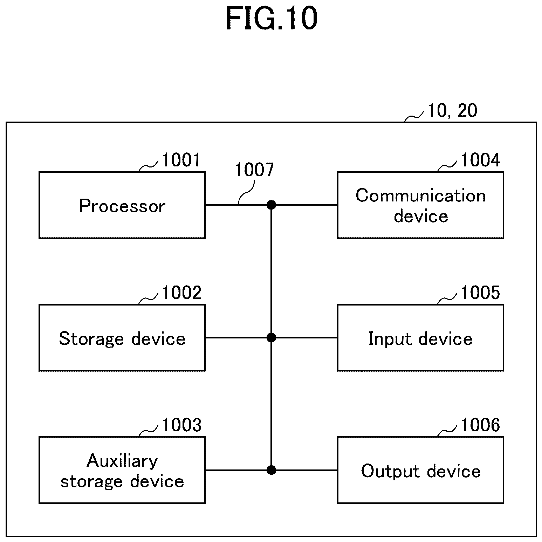

For example, the base station 10, the terminal 20, and the like in one embodiment of this disclosure may function as a computer for performing the processing of a radio communication method of this disclosure. Fig. 10 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. For example, the control unit 140 of the base station 10 illustrated in Fig. 6 may be attained by a control program that is stored in the storage device 1002 and is operated by the processor 1001. In addition, for example, the control unit 240 of the terminal 20 illustrated in Fig. 9 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The auxiliary storage device 1003 may be referred to as an auxiliary storage unit. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

(Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUSCH, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the terminal in this disclosure may be replaced with the base station. In this case, the function of the user terminal described above may be provided in the base station.

The terms "determining" and "determining" used in this disclosure may involve diverse operations. "Determining" and "determining", for example, may include deeming judging, calculating, computing, processing, deriving, investigating, looking up (search, inquiry) (for example, looking up in a table, a database, or another data structure), and ascertaining, as "determining" and "determining". In addition, "determining" and "determining" may include deeming receiving (for example, receiving information), transmitting (for example, transmitting information), input, output, and accessing (for example, accessing data in a memory), as "determining" and "determining". In addition, "determining" and "determining" may include deeming resolving, selecting, choosing, establishing, comparing, and the like as "determining" and "determining". That is, "determining" and "determining" may include deeming an operation as "determining" and "determining". In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, unit representing TTI may be referred to as a slot, a mini slot, and the like, but not a subframe. Also, 1 slot may be referred to as a unit time. The unit tine may differ for each cell according to numerology.

Here, TTI, for example, indicates minimum time unit of scheduling in radio communication. For example, in an LTE system, the base station performs scheduling for allocating a radio resource (a frequency bandwidth, transmission power, and the like that can be used in each of the terminals 20) in TTI unit, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it may not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art

**EP 4 322 512 A1**

that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

[Description of Symbols]

| | |
|---|---|
| 10 | base station |
| 110 | transmission unit |
| 120 | reception unit |
| 130 | configuration unit |
| 140 | control unit |
| 20 | terminal |
| 210 | transmission unit |
| 220 | reception unit |
| 230 | configuration unit |
| 240 | control unit |
| 30 | satellite |
| 1001 | processor |
| 1002 | storage device |
| 1003 | auxiliary storage device |
| 1004 | communication device |
| 1005 | input device |
| 1006 | output device |

**Claims**

1. A terminal comprising:

   a control unit configured to calculate a timing adjustment value including a terminal-specific drift rate caused by a drift of a relay apparatus in a non-terrestrial network; and
   a transmission unit configured to transmit a signal at a timing based on the timing adjustment value.

2. The terminal as claimed in claim 1,
   wherein the control unit is configured to calculate the timing adjustment value using a value including the terminal-specific drift rate and a common drift rate.

3. A terminal comprising:

   a control unit configured to calculate a timing adjustment value including a terminal-specific margin in a service link of a non-terrestrial network; and
   a transmission unit configured to transmit a signal at a timing based on the timing adjustment value.

4. The terminal as claimed in claim 3,
   wherein the control unit is configured to calculate the timing adjustment value using a value including the terminal-specific margin and a common margin.

5. A base station comprising:

   a transmission unit configured to transmit a value including a terminal-specific drift rate caused by a drift of a relay apparatus in a non-terrestrial network, and including a common drift rate; and
   a reception unit configured to receive a signal transmitted from a terminal at a timing based on a timing adjustment value calculated using the value.

6. A base station comprising:

a transmission unit configured to transmit a value including a terminal-specific margin in a service link of a non-terrestrial network, and including a common margin; and
a reception unit configured to receive a signal transmitted from a terminal at a timing based on a timing adjustment value calculated using the value.

# FIG.1

Satellite/HAPS

$2T_0+2T_2$:TA at feeder link
$2T_1$:TA at service link

gNB/Gateway

One beam/cell

# FIG.2

EP 4 322 512 A1

# FIG.3

EP 4 322 512 A1

# FIG.4

$$-TA_{0,margin} \lessgtr T_{0,error} \lessgtr TA_{0,margin}$$
$$-TA_{1,margin} \lessgtr T_{1,error} \lessgtr TA_{1,margin}$$

Estimated Satellite/HAPS location

Real Satellite/HAPS location

$T_{0,est} = T_0 + T_{0,error}$

$T_0$

$T_2$

RP

$T_2$

$T_{1,est} = T_1 + T_{1,error}$

$T_1$

gNB/Gateway

Estimated UE location

Real UE location

One beam/cell

# FIG.5

Estimated Satellite/HAPS location — 30

Real Satellite/HAPS location — 30

gNB/Gateway — 10

$X'$

$X$

RP

$N_{TA}' + N_{TA, UE-specific, margin}$

$N_{TA}'$ or

$N_{TA}$

Estimated UE location

Real UE location — 20

One beam/cell — 20

EP 4 322 512 A1

# FIG.6

# FIG.7

# FIG.8

10

Base station

Communication unit

110

Transmission unit

120

Reception unit

130

Configuration unit

140

Control unit

# FIG.9

20

Terminal

Communication unit

210

Transmission unit

220

Reception unit

230

Configuration unit

240

Control unit

# FIG.10

10, 20

1001 Processor

1007

1004 Communication device

1002 Storage device

1005 Input device

1003 Auxiliary storage device

1006 Output device

## INTERNATIONAL SEARCH REPORT

| International application No. |
| --- |
| PCT/JP2021/014517 |

A. CLASSIFICATION OF SUBJECT MATTER
H04M 11/00(2006.01)i; H04W 56/00(2009.01)i
FI: H04M11/00 302; H04W56/00 130

According to International Patent Classification (IPC) or to both national classification and IPC

B. FIELDS SEARCHED

Minimum documentation searched (classification system followed by classification symbols)
H04M11/00; H04W56/00

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | WO 2019/097922 A1 (SONY CORP) 23 May 2019 (2019-05-23) paragraphs [0172]-[0216] | 1-6 |

☐ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08 July 2021 (08.07.2021) | 03 August 2021 (03.08.2021) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

Information on patent family members

International application No.

PCT/JP2021/014517

| Patent Documents referred in the Report | Publication Date | Patent Family | Publication Date |
|---|---|---|---|
| WO 2019/097922 A1 | 23 May 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.213 V16. 5.0,* 2021, 03

- *3GPP TS 38.211 V16. 5.0,* 2021, 03